# EUROPEAN PATENT SPECIFICATION

(11) **EP 1 423 853 B1**
(45) Date of publication and mention of the grant of the patent: **01.04.2009**
(21) Application number: 02790952.2
(22) Date of filing: 22.10.2002
(51) Int. Cl.: G11B 20/12, G11B 19/02

(54) **INFORMATION STORAGE MEDIUM CONTAINING EVENT OCCURRENCE INFORMATION, AND METHOD THEREFOR**
INFORMATIONSSPEICHERMEDIUM, DAS EREIGNISVORKOMMNISINFORMATIONEN ENTHÄLT UND VERFAHREN DAFÜR
SUPPORT D'ENREGISTREMENT D'INFORMATIONS CONTENANT DES INFORMATIONS SUR LA SURVENUE D'EVENEMENTS ET METHODE CORRESPONDANT

(30) Priority: 23.10.2001 KR 2001065390; 03.12.2001 KR 2001075901; 16.03.2002 KR 2002014273; 15.10.2002 KR 2002062691
(43) Date of publication of application: 02.06.2004
(73) Proprietor: SAMSUNG ELECTRONICS CO., LTD., Suwon-si, Gyeonggi-do 442-742 (KR)
(72) Inventor: CHUNG, Hyun-Kwon, Gwangju-gun, 464-800 Gyeonggi-do (KR); MOON, Seong-Jin, Paldal-gu, Suwon-si, 442-470 Gyeonggi-do (KR); HEO, Jung-Kwon, Seocho-gu, 137-766 Seoul (KR)
(74) Representative: Robinson, Ian Michael
(86) International application number: PCT/KR2002/001976
(87) International publication number: WO 2003/036644

(56) References cited:
- EP-A- 0 886 276
- EP-A- 1 006 459
- WO-A-99/38098
- JP-A- 10 136 314
- JP-A- 10 162 018
- US-A- 5 684 715
- US-A1- 2002 078 144
- PATENT ABSTRACTS OF JAPAN vol. 1999, no. 11, 30 September 1999 (1999-09-30) -& JP 11 161663 A (TOSHIBA CORP), 18 June 1999 (1999-06-18)

## Description

### Technical Field

The present invention relates to the field of interactive digital versatile discs (DVDs), and more particularly, to an information storage medium and a method for playing the information storage medium, by which a web document can be reproduced without changing the format of a DVD-Video.

### Background Art

DVDs containing a web document together with AV data based on a personal computer (PC), which is hereinafter referred to as interactive DVDs, are being sold. AV data recorded on interactive DVDs can be reproduced in two modes: a video mode in which AV data is displayed in the same way as general DVDs, and an interactive mode in which reproduced AV data is displayed through a display window defined by a web document. If a user adopts the interactive mode, a web browser in a PC displays a web document recorded on an interactive DVD. A display window of the web document displays AV data selected by the user. If the selected AV data is a movie, the display window of the web document displays the movie, while the area other than the display window displays a variety of additional information, such as, the movie script, the synopsis, pictures of actors and actresses, or the like. The additional information includes an image file or a text file.

However, in an interactive mode, in order to display AV data through a display window defined according to the HTML language, the AV data needs to be synchronized with a web document. The synchronization is generally precise, so that AV data and a web document are simultaneously reproduced at a set time and displayed together; however, the synchronization can be rough, as long as a relation is maintained between AV data and a web document. In a conventional interactive mode, synchronization is achieved by a timer implemented as a software system. However, it may be complicated to implement the synchronization that is dependent on a timer. This complication becomes more serious when a plurality of events occur at the same time.

JP 11 161663 discloses a DVD which merges a video title and a HTML file provided over the Internet. This document forms the pre-characterising portion of the claims appended hereto.

### Disclosure of the Invention

To solve the above and other problems, it is an aspect of the present invention to provide an information storage medium and a method for playing the information storage medium, by which AV data and a markup document are more simply reproduced in synchronization.

Another aspect of the present invention is to provide an information storage medium and a method for playing the information storage medium, by which AV data and a markup document are synchronously reproduced using an existing DVD-Video format.

Still another aspect of the present invention is to provide an information storage medium and a method for playing the information storage medium, by which the point in time when an event occurs is more simply designated and a particular event occurs at the designated point in time.

The above and other aspects are achieved by an information storage medium, comprising: AV data including at least one video object that is constituted of video object units, each video object unit having an audio pack, a video pack, and a navigation pack; characterised by: event occurrence information specifying a data structure of the AV data for generating an event when the specified data structure is reproduced.

Preferably, the information storage medium further includes a markup document for outputting an AV screen from the AV data, and the event occurrence information is recorded in the markup document.

The AV data is recorded as a video title set constituted of at least one video object. Preferably, the event occurrence information is for requesting that a trigger event occurs when a video object unit corresponding to the navigation pack of a designated video title set is reproduced. That is, the event occurrence information is for requesting that designated contents are output on a screen when a video object unit corresponding to the navigation pack of a designated video title set is reproduced.

The above and other aspects of the present invention are achieved by a method of playing an information storage medium comprising AV data including at least one video object that is constituted of video object units, each video object unit having an audio pack, a video pack, and a navigation pack; and event occurrence information specifying a data structure of the AV data for generating a predetermined event when the specified data structure is reproduced, the method characterised by: interpreting the event occurrence information; and (b) generating an event if a data structure matched with the result of the interpretation performed in step (a) is discovered while the AV data is being decoded.

Preferably, in the interpretation step in the method, first, event occurrence information in a markup document in which a display window for displaying an AV screen on which the video object is reproduced is defined is interpreted. The place in which an event matched with the interpretation result occurs is then detected.

It is also preferable that the video title includes at least one video object that is constituted of cells, each having an audio pack, a video pack, and a navigation pack, and that the event occurs when portion of the AV data corresponding to the place in which an event occurs is reproduced.

### Brief Description of the Drawings

FIG. 1 is a directory structure diagram of an information storage medium according to a preferred embodiment of the present invention;
FIGS. 2A and 2B are data structure diagrams of reproduction control information of the DVD video directory VIDEO_TS of FIG. 1;
FIG. 3 is a detailed structure diagram of the video title set (VTS) of FIG. 2A;
FIG. 4 is a detailed structure diagram of a navigation pack NV_PCK;
FIGS. 5 and 6 are detailed structural diagrams of the presentation control information (PCI) packet of FIG. 4;
FIGS. 7 and 8 are reference diagrams for illustrating a program chain (PGC);
FIG. 9A is an image produced when NV_PCK_LBN is 0;
FIG. 9B is an image produced when NV_PCK_LBN is 1000;
FIG. 10 is a block diagram of a reproduction apparatus according to a first embodiment of the present invention;
FIG. 11 is a block diagram of a reproduction apparatus according to a second embodiment of the present invention;
FIG. 12 is a detailed reference diagram for illustrating a process in which the reproduction apparatuses of FIGS. 10 and 11 generate an event according to the present invention;
FIG. 13 is a flowchart illustrating a reproduction method according to the present invention;
FIG. 14 is a flowchart illustrating an example of FIG. 13; and
FIG. 15 is a flowchart illustrating an embodiment of FIG. 14.

### Best mode for carrying out the Invention

An information storage medium according to the present invention stores a video title set containing a video object. The video object (VOB) is composed of video object units (VOBUs), each including an audio pack, a video pack, and a navigation pack. The information storage medium stores a markup document for supporting an interactive mode. In the present specification, the markup document denotes a markup resource including not only a markup document itself but also various image and graphic files contained in the markup document. A markup document screen indicates a screen on which a markup document interpreted by a markup document viewer is displayed. The markup document defines a display window for outputting decoded AV data, that is, decoded video object units. The markup document also defines event occurrence information used to generate a trigger event in a method according to the present invention.

The event occurrence information according to the present invention is defined based on the data structure of the AV data recorded in an information storage medium without changing the data structure. To be more specific, if a specified navigation pack of a specified video title set is discovered and a video object set having the navigation pack is reproduced, a corresponding trigger event is required to occur. Accordingly, when the video object set starts being reproduced, a specified content is displayed on a predetermined area of the markup document screen. The event occurrence information according to the present invention will be described in greater detail later.

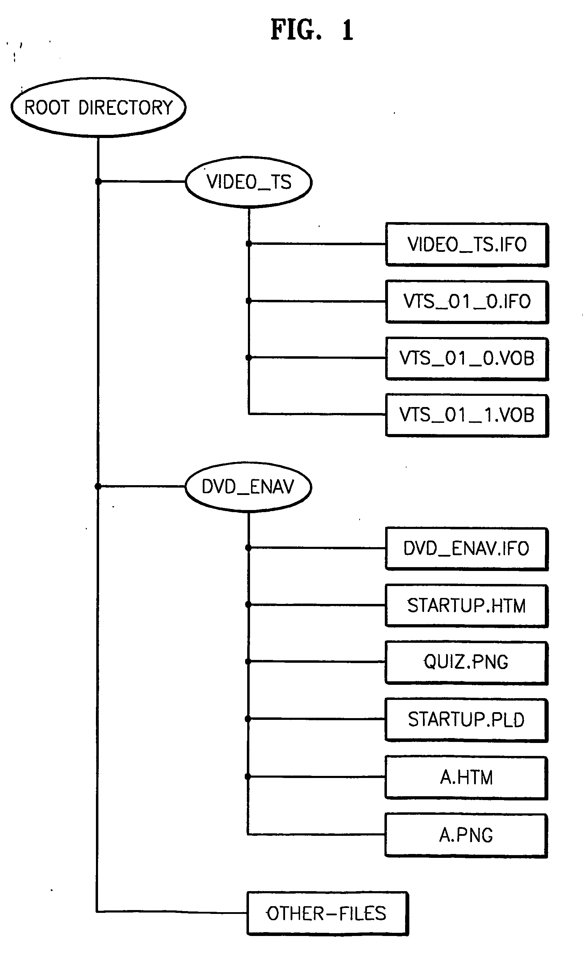

FIG. 1 is a directory structure diagram of an information storage medium according to a preferred embodiment of the present invention. Referring to FIG. 1, a root directory includes a DVD video directory VIDEO_TS in which AV data is contained. The VIDEO_TS includes a file VIDEO_TS.IFO that contains navigation information regarding the entire video title recorded in the information storage medium. In the VIDEO_TS.IFO, language information designated as a default value for a video title set is recorded. The VIDEO_TS also includes a file VTS_01_0.IF0 in which navigation information on the first video title set is recorded. In addition, video titles VTS_01_0.VOB, VTS_01_1.VOB, ... , which constitute a video title set, are recorded in the VIDEO_TS. The video titles VTS_01_0.VOB, VTS_01_1.VOB, ... are referred to as VOBs. Each of the VOBs has an integer number of VOBUs, each generally having a navigation pack, at least one video pack, and an audio pack. The detailed structure of a VOBU is disclosed in a DVD-Video standard, ┌DVD-Video for Read Only Memory disc 1.0┘.

The root directory also includes a directory DVD_ENAV in which a navigation file DVD_ENAV.IFO according to the present invention is recorded. For example, the navigation file DVD_ENAV.IFO includes the definition of a corresponding directory, the structure of the pertinent directory, the number of titles included in the corresponding directory, the basic information regarding the corresponding directory, a language used in the titles, information on a subtitle and font, markup document display information, such as a resolution and a color, and copyright information. The directory DVD_ENAV also includes STARTUP.HTM, which is a markup document that defines a display window for displaying an AV image. STARTUP.HTM includes event occurrence information for generating a trigger event in a method, according to the present invention. The event occurrence information included in STARTUP.HTM is implemented by an application program interface (API). The API has, as parameters, a trigger event identifier, an identifier for a specified video title set, and an identifier for a specified navigation pack.

The directory DVD_ENAV can also include a pre-loading list file STARTUP.PLD for performing pre-loading depending on pre-loading information recorded in STARTUP.HTM. QUIZ.PNG is an example of a file that contains content which is output in synchronization with the AV screen when a trigger event based on the file STARTUP.HTM occurs. A.HTM is a file to be pre-loaded, and A.PNG is a file linked to the file A.HTM. The applicant of the present invention has filed Korean Application No. 01-65393 entitled "Information Storage Medium Containing Pre-loading Information and Apparatus and Method of Playing the Information Storage Medium". Since the above-mentioned application describes in detail the pre-loading information, that is, the pre-loading list file, the to-be-preloaded file, and the API for preloading, only the necessary contents will now be briefly described.

The pre-loading information commands that the to-be-preloaded file are read out and stored in a cache memory. For example, the pre-loading information can be implemented as a link tag, which includes the path and/or attributes of the pre-loading list file. The link tag is bounded by a pair of head tags. Alternatively, the pre-loading information can be implemented as an API that includes, as parameters, the path and/or attributes of the pre-loading list file and calls the pre-loading list file. A resource locator can be attached to a path for the pre-loading list file and the to-be-preloaded file. Hence, a path used to call the to-be-preloaded file A.HTM recorded on a DVD is dvd://DVD_ENAV/A. HTM.

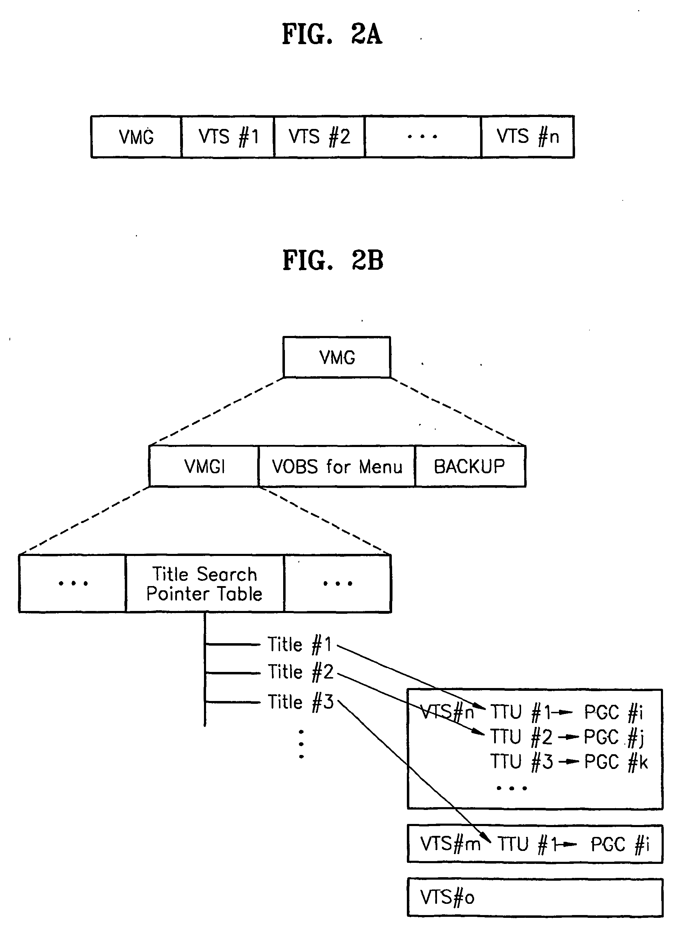

FIGS. 2A and 2B are data structure diagrams of reproduction control information of the DVD video of FIG. 1. Referring to FIG. 2A, a DVD video directory stores n video title sets VTS #1, VTS #2, ... , and VTS #n and a video manager (VMG) in which introduction information regarding all of the video titles is recorded. Referring to FIG. 2B, a VMG includes: video manager information (VMGI), which contains control data; a video object set (VOBS) linked to the VMG; and backup data of the VMGI. The VOBS may not be included in the VMG.

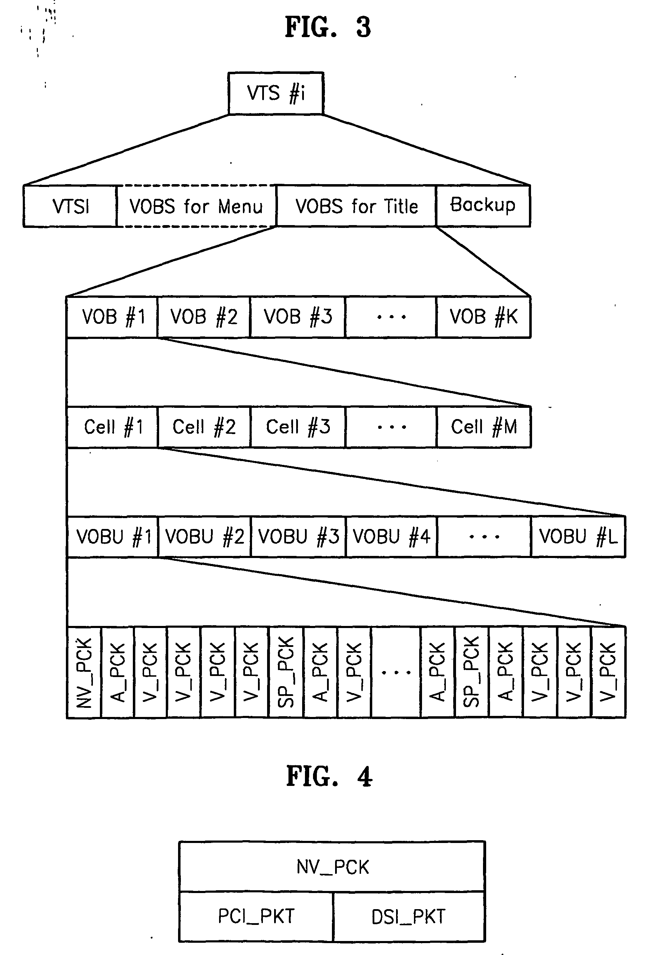

FIG. 3 is a detailed structure diagram of a video title set (VTS) of FIG. 2A. Referring to FIG. 3, VTS #i includes video title set information (VTSI) containing header information; a VOBS for displaying a menu screen; a VOBS for constituting a video title set; and VTSI backup data. The VOBS for displaying a menu screen may not be included.

The VOBS for constituting a video title set is composed of K video objects VOB #1, VOB #2, ... , and VOB #K A VOB is composed of M cells Cell #1, Cell #2, ... , and Cell #M. Each cell is composed of L VOBUs #1, #2, ... , and #L. A VOBU includes a navigation pack NV_PCK necessary for reproducing or searching for the corresponding VOBU. Also, audio packs A_PCK, video packs V_PCK, and subpicture packs SP_PCK are multiplexed and recorded in the VOBU.

FIG. 4 is a detailed structure diagram of the navigation pack NV_PCK. Referring to FIG. 4, NV_PCK is constituted of a presentation control information (PCI) packet PCI_PKT and a data search information (DSI) packet DSI_PKT. The PCI packet includes PCI necessary for reproducing a video pack and/or audio pack. The DSI packet includes DSI necessary for searching a video pack and/or audio pack.

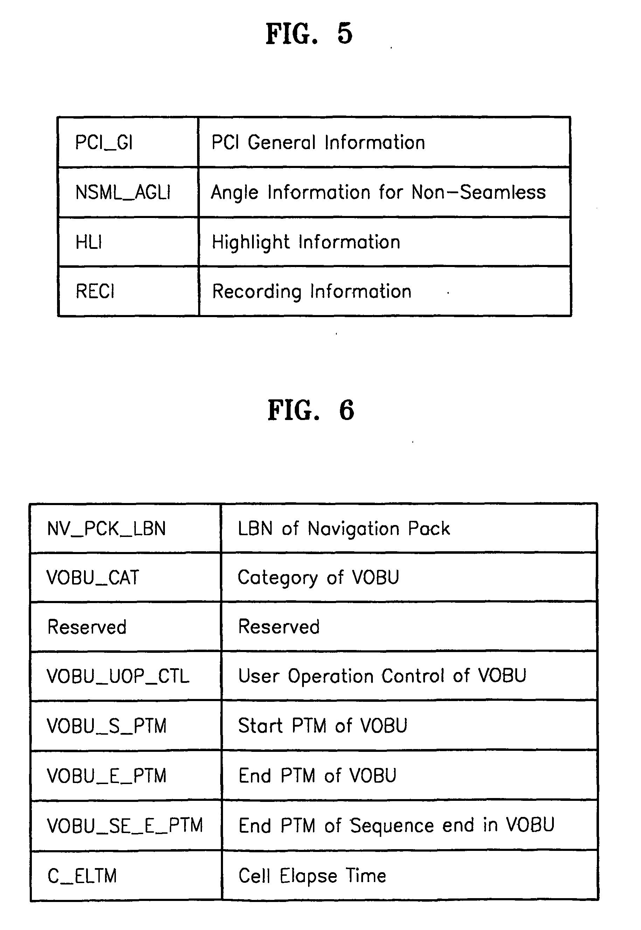

FIGS. 5 and 6 are detailed structural diagrams of the PCI packet of FIG. 4. Referring to FIG. 5, the PCI packet includes PCI_GI, which contains header information; NSML_AGLI, which contains angle information for non-seamless reproduction; HLI, which contains highlight information; and RECI, which contains recording information.

Referring to FIG. 6, the PCI_GI includes the logical block number (LBN) of a navigation pack, NV_PCK_LBN; the category of a VOBU, VOBU_CAT; the user operation control of a VOBU, VOBU_UOP_CTL; the starting point in time of a VOBU, VOBU_S_PTM; the ending point in time of a VOBU, VOBU-E_PTM; the ending point in time of a sequence end in a VOBU, VOBU_SE_E_PTM; and a cell elapse time C_ELTM. NV_PCK_LBN denotes the number of a navigation pack. VOBU_CAT denotes the status of an analog protection system (APS).
VOBU_UOP_CTL denotes a user operation prohibited when a VOBU is reproduced and displayed. VOBU_S_PTM denotes the point in time for starting reproduction of video data included in a VOBU. VOBU_E_PTM denotes the point in time for ending reproduction of video data included in a VOBU. VOBU_SE_E_PTM is a code that indicates a termination of the reproduction of video data included in a VOBU. C_EL TM describes a time that elapses from the starting time for reproducing the first VOBU to the starting time for reproducing the corresponding VOBU within a corresponding cell.

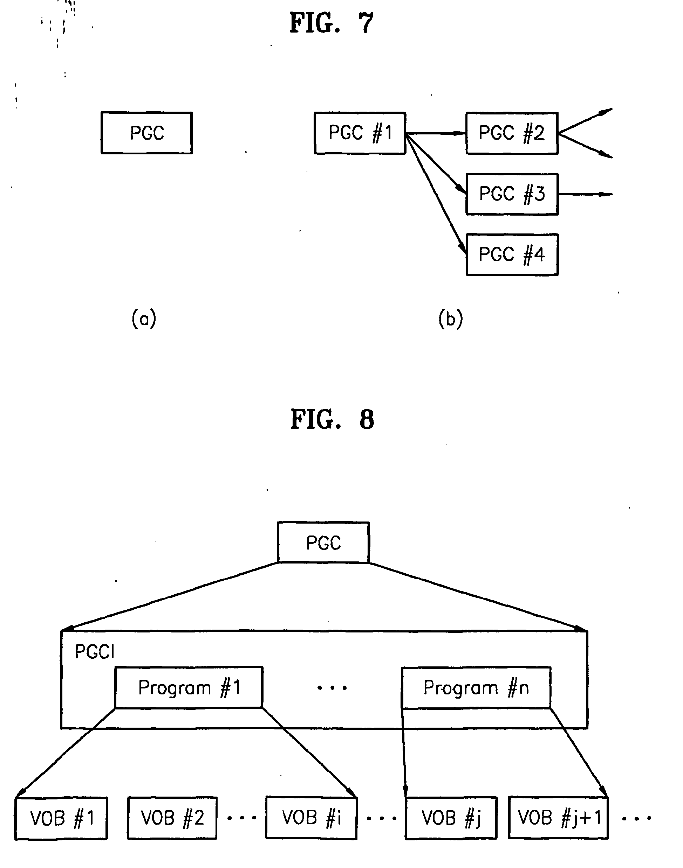

FIGS. 7 and 8 are reference diagrams for illustrating a program chain (PGC). The PGC denotes the reproduction sequence of a logic unit, that is, a program, for reproducing the whole or part of a video title. In other words, a video title is constituted of at least one PGC.
Referring FIG. 7, a PGC indicated by (a) represents that a video title is composed of only one PGC, and PGC #1 indicated by (b) represents that a video title is defined with a plurality of PGCs. Referring to FIG. 8, a PGC is linked to the cells of a corresponding VOB via program chain information (PGCI). The PGCI is defined in the VMGI of FIG. 2B and the VTSI of FIG. 3. The PGCI contains a program chain number (PGCN). The PGCN is a serial number allocated to a PGC and serves as an identifier.

In an embodiment of the present invention, NV_PCK_LBN and VOBU_S_PTM are used as parameters to generate a trigger EVENT, as described later. In another embodiment of the present invention, the number of a program chain, PGCN, and the elapsed time of reproducing the program chain are used as parameters to generate a trigger EVENT. In still another embodiment of the present invention, a title number (TTN) included in a VMG and the elapsed time of reproducing the title are used as parameters to generate a trigger EVENT.

For a trigger event, APIs and necessary parameters are included in a markup document STARTUP.HTM. These will now be enumerated in detail.

### 1. DvdVideo.SetTrigger (trigger_id, vtsn, nv_Ibn, ref)

This API indicates that a trigger event occurs when a VOBU containing a specified navigation pack in a specified video title set starts being reproduced.

The first parameter, trigger_id, denotes the identifier of a trigger event. The second parameter, vtsn, denotes the number of a video title set for which a trigger event is to occur. The third parameter, nv_Ibn, denotes the number of a navigation pack, NV_PCK_LBN, the navigation pack existing within a video title set for which a trigger event is to occur. A fourth parameter, ref, denotes a value to be contained in the second parameter when an event is called.

For example, DvdVideo. SetTrigger (0,1,1000,0); // indicates that a trigger event occurs at a point in time VOBU_S_PTM when a VOBU having a navigation pack corresponding to vtsn=1 and nv_Ibn=1000 starts being reproduced. Such a trigger event does not need to perfectly synchronize with an AV screen. The trigger event may occur within several tens of msec (e.g., about 50 msec) after the reproduction starting point in time.

### 2. DvdVideo.SetTrigger (trigger_id, vob_id, vobu_s_ptm, ref)

This API indicates that a trigger event occurs at the start of reproduction of a VOBU containing a specified navigation pack in a video title to which a title being currently reproduced belongs.

The first parameter, trigger_id, denotes the identifier of a trigger event. The second parameter, vob_id, denotes the identifier of a VOB within a video title for which a trigger event is to occur. A third parameter, vobu_s_ptm, denotes the number of a navigation pack which exists within a video title set for which a trigger event is to occur. The fourth parameter, ref, denotes a value to be contained in the second parameter when an event is called.

For example, DvdVideo.SetTrigger (0,1,180000,0); // instructs that a trigger event occurs at a point in time when a VOBU having a navigation pack corresponding to vtsn=1 and vobu_s_ptm=180000 starts being reproduced. Such a trigger event does not need to perfectly synchronize with an AV screen. The trigger event may occur within several seconds after the point in time when reproduction starts. Since the vobu_s_ptm is a value that is processed in units of 1/90000 sec, the parameter vobu_s_ptm is expressed in hour:minute:second:millisecond (hh:mm:ss:ms) for convenience of a manufacturer and can also be processed in units of 1/90000 second into which the unit hh:mm:ss:ms is converted.

### 3. DvdVideo.SetTrigger (trigger_id, ttn, elapsed_time, ref)

This API instructs that a trigger event occurs at the start of reproduction of a VOBU containing a navigation pack at a specified elapsed time at a specified video title number.

The first parameter, trigger_id, denotes the identifier of a trigger event. The second parameter, ttn, denotes the number of a video title for which a trigger event is to occur. The third parameter, elapsed_time, denotes a reproduction elapsed time within a video title for which a trigger event is to occur. The fourth parameter, ref, denotes a value to be contained in the second parameter when an event is called.

For example, DvdVideo.SetTrigger (0,1, "00:20:10", 0); // instructs that a trigger event occurs when starting reproduction of a VOBU having a navigation pack corresponding to ttn=1 and elapsed_time = 20 minutes:10 seconds during the video title reproduction. Such a trigger event does not need to perfectly synchronize with an AV screen. The trigger event may occur within several tens of msec (e.g., about 50 msec) after the point in time when reproduction starts.

### 4. DvdVideo.ClearTrigger (trigger_id)

This API denotes cancellation of a requested trigger event.

The parameter trigger_id denotes the identifier of a trigger event. By designating -1 to the parameter trigger_id, the parameter trigger_id can also be used to denote cancellation of all occurred trigger events.

For example, DvdVideo.ClearTrigger( -1);// instructs that all trigger events are cancelled.

### 5. DvdVideo.VTSNumber

This API denotes that the number of a video title set to which a VOBU currently being reproduced belongs is to be provided.

For example, var a = DvdVideo.VTSNumber // instructs that the number of a video title set currently being reproduced is stored in variable a.

### 6. DvdVideo.CurrentPosition

This API represents that the number of a navigation pack present within a video title set to which a VOBU currently being reproduced belongs is to be provided.

For example, var b = DvdVideo.CurrentPosition // instructs that the number of a navigation pack within a video title set currently being reproduced is stored in variable b.

### 7. DvdVideo.VOB_ID

This API denotes the identifier of a VOB, VOB_ID, to which a VOBU currently being reproduced belongs.

For example, var a = DvdVideo.VOB_ID // instructs that the VOB_ID is stored in variable a.

### 8. DvdVideo.CurrentTime

This API denotes provision of the VOB_S_PTM of a navigation pack to which a VOBU currently being reproduced belongs. This time can be expressed in hh:mm:ss:ms (hour:minute:second:millisecond) so that a manufacturer can easily use the time.

For example, var b = DvdVideo.CurrentTime // indicates that the VOB_S_PTM of a VOBU currently being reproduced is stored in variable b.

Meanwhile, APIs for preloading included in a source code will now be enumerated.

### 1. navigator.Preload (URL,flag)

This is an API that preloads to-be-preloaded files into a cache memory. Parameters used for this API represent information regarding the positions of a preloading list file and a to-be-preloaded file.

The parameter, URL, denotes the path of a preloading list file or a to-be-preloaded file. The parameter, flag, is 1 for a preloading list file or 0 for a to-be-preloaded file. A "true" is returned as a return value if preloading succeeds, or a "false" is returned as a return value if preloading fails.

For example, navigator. Preload
("http://www.holeywood.com/tom.pld",1) // instructs that indicated to-be-preloaded files are preloaded into a cache memory by searching a preloading list file at the Internet address
"http://w.holewood.com/tom.pld".

### 2. navigator. Preload (URL,resType)

This is an API that preloads to-be-preloaded files into a cache memory.

Parameters used for this API can represent information regarding the positions of a preloading list file and a to-be-preloaded file and, furthermore, the attributes of the to-be-preloaded file. The parameter, URL, denotes the path of a preloading list file or a to-be-preloaded file. The parameter, resType, denotes the attributes of a to-be-preloaded file. A "true" is returned as a return value if preloading succeeds or a "false" is returned as a return value if preloading fails.

For example, navigator.Preload ("dvd:dvd_enav/a.htm", "text/xml") // indicates to read out a to-be-preloaded file of "dvd://dvd_enavla.htm" existing on a dvd. The to-be-preloaded file is an xml text file.

An API, navigator.Preload ("hftp://www.holeywood.com/tom.htm", "text/html") //, indicates to read out a file of "http://www.holeywood.com/tom.html" existing on the Internet. The file is an html text file.

An example of a DvdVideoEvent Object structure is as follows.

| | | |
|---|---|---|
| Interface DvdEvent : Event { | | |
| | readonly attribute unsigned longindex; // id of Event | |
| | readonly attribute unsigned long parm1; | |
| | readonly attribute unsigned long parm2; | |
| | readonly attribute unsigned long parm3; | |
| | void initDVDEvent (in DOMString typeArg, | |
| | | in boolean canBubbleArg, |
| | | in boolean cancelableArg, |
| | | in unsigned long indexArg, |
| | | in unsigned long parm1Arg, |
| | | in unsigned long parm2Arg, |
| | | in unsigned long parm3Arg); |

An example of a STARTUP.HTM source code that uses the aforementioned APIs is as follows.

| | | |
|---|---|---|
| <?xml version= "1.0" encoding = "UTF-8"?> | | |
| <IDOCTYPE html PUBLIC-//DVD//DTD XHTML DVD-HTML 1.0//EN | | |
| "http://www.dvdforum.org/enav/dtd/dvdhtml-1-0.dtd"> | | |
| <html> | | |
| <head> | | |
| <title>Trigger Event Sample </title> | | |
| <style type = "text/css"> | | |
| <I- start screen construction after subtracting 10% from each edge of a screen | | |
| having a general 4 × 3 aspect ratio and determining the logical pixels of an OSD | | |
| screen to be 720 × 480, with a video display method as a background --> | | |
| @video-display { | | |
| video-placement: background | | |
| video-aspect-ratio:4 × 3N | | |
| video-clip-rectangle: (0,0,720,480) | | |
| video-background-color: #00000000 | | |
| clip-rectangle: (0,0,720,480) | | |
| viewport-rectangle: (0,0,720,480) | | |
| <!- the background color of the body is determined to be transparent --> | | |
| body {background-color : transparent} | | |
| #quiz { | | |
| | position:absolute; visibility;hidden; overflow:hidden; | |
| | width:277; height:98; clip:rect (0 277 98 0); | |
| | background-color:#eeeeee; | |
| | border:outset 4px; | |
| </style> | | |
| <script> | | |
| <!- | | |
| function dvdvideo_handler(evt) | | |
| /* evt follows the interface standard of the aforementioned Dvd Event Ojbect. */ | | |
| { | | |
| | switch(evt.index) | |
| | { | |
| | case TRIGGER_EVENT:// trigger event is trapped. | |
| If.(evt.parm1 == 1 && evt.parm2 == 0) | | |
| {/* trigger event 1 designated below is received. */ | | |
| | | var demo = document.getElementByld('quiz') |
| | | demo.style.left = 435; demo.style.top = 377; |
| demo.style.visibility = visible ; | | |
| | | DvdVideo.ClearTrigger(-1); |
| | } | |
| if (evt.parm1 == 2 && evt.parm2 == 0) | | |
| {/* trigger event 2 designated below is received and preloaded. */ | | |
| navigator. Preload ("dvd://dvd_enav/startup.pld", | | |
| "text/preload"); | | |
| | | } |
| | } | |
| } | | |
| function setupEventListeners() | | |
| { | | |
| | var htmlNode = document.documentElement; | |
| | /* event handler is installed */ | |
| | htmlNode.addEventListener("dvdvideo",dvdvideo_handler,true); | |
| | /* locations where trigger events 1 and 2 are to occur are determined */ | |
| DvdVideo.SetTrigger(1,1,1000,0); /* trigger where quiz is popped up */ | | |
| DvdVideo.SetTrigger(2,1,1200,0); /* trigger where preloading is requested */ | | |
| Dvdvideo.Play(); /* reproduction starts */ | | |
| } | | |
| // !-> | | |
| </script> | | |
| </head> | | |
| <body onload = "setupEventListeners()"> <!-when body is loaded, | | |
| setupEventListeners are called. */ | | |
| <div id = "quiz"><img src="quiz.png"></div> | | |
| </body> | | |
| </html> | | |

An example of a source code of a preloading list file
STARTUP.PLD will now be illustrated.

| |
|---|
| <?xml version= "1.0" encoding="UTF=8" ?> |
| <!DOCTYPE preload PUBLIC "-\\DVD\\DTD DVD Preload List 1.0\\EN" |
| "http://www.dvdforum.org/enav/dvd-preload-list.dtd"--> |
| <preload cachesize="128KB"> |
| <filedef type="text/xml" href= "dvd://DVD_ENAV/A.HTM"/> |
| <filedef type="image/png" href= "dvd://DVD_ENAV/A.PNG"/> |
| </preload> |

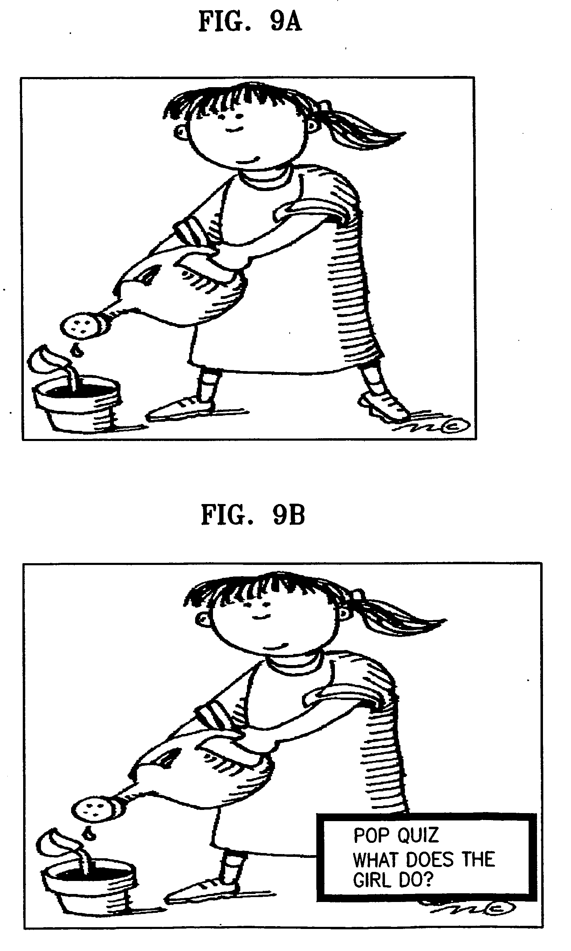

FIGS.9A and 9B are screens on which a trigger event occurs according to the above-described source codes. Referring to FIGS. 9A and 9B, no events occur when NV_PCK_LBN is 0, and a quiz screen (markup document screen) from a quiz file QUIZ.PNG is output on an AV screen at the point in time when an indicated event occurs, for example, when NV_PCK_LBN is 1000.

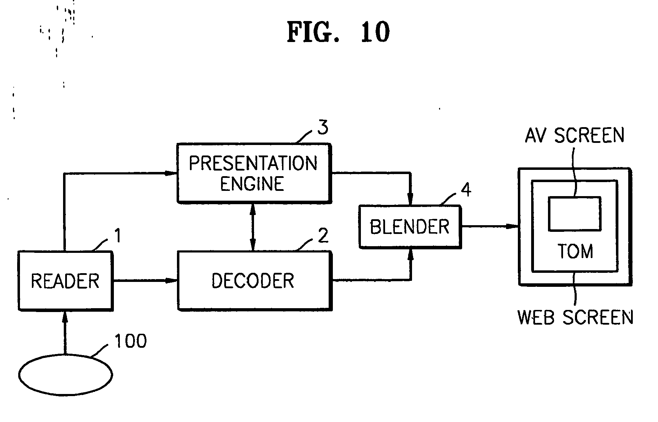

FIG. 10 is a block diagram of a reproduction apparatus according to a first embodiment of the present invention. Referring to FIG. 10, the reproduction apparatus reproduces AV data from a disc 100. AV data in the disc 100 includes at least one video object, each composed of video object units that each have an audio pack, a video pack, and a navigation pack. The disc 100 stores event occurrence information for generating a designated event based on the data structure of the AV data. To perform reproduction, the reproduction apparatus includes a reader 1, a decoder 2, a presentation engine 3, and a blender 4. The reader 1 reads the AV data or the event occurrence information. The presentation engine 3 interprets the read-out event occurrence information, outputs the interpretation result to the decoder 2, and presents an event requested to occur by the decoder 2. To be more specific, first, the presentation engine 3 interprets event occurrence information recorded in a reproduced markup document that defines a display window for displaying an AV screen in which AV data has been reproduced. Then, the presentation engine 3 transmits the interpretation result, that is, information relating to the data structure on which an event occurrence request is based, to the decoder 2. For example, information relating to a point in time (place) when event occurrence is requested can be expressed based on a designated navigation pack in a predetermined video title set.

In the above embodiment, for example, an event occurs based on a video title set number (VTSN) and a navigation pack number (NV-PCK_LBN). However, in another embodiment, an event can occur based on other data conditions, such as, a video object number VOB_ID, a start point in time of a video object unit (VOBU_S_PTM), or the like.

For example, an event can occur based on the number of a program chain and the elapsed time for reproducing the program chain. The decoder 2 checks the data structure while decoding the read-out AV data. If the decoder 2 discovers data satisfying a condition in which event occurrence is requested, the decoder 2 notifies the presentation engine 3 of the discovery of the data. When the presentation engine 3 reproduces AV data having the discovered data structure, it outputs designated contents on a screen, for example, at the point in time or several tens of milliseconds after the start of reproduction of a VOBU corresponding to a designated navigation pack in a designated video title set. Also, as another example, the presentation engine 3 outputs designated contents on a screen at a designated elapsed time for a designated program chain or several tens of milliseconds after the elapsed time.

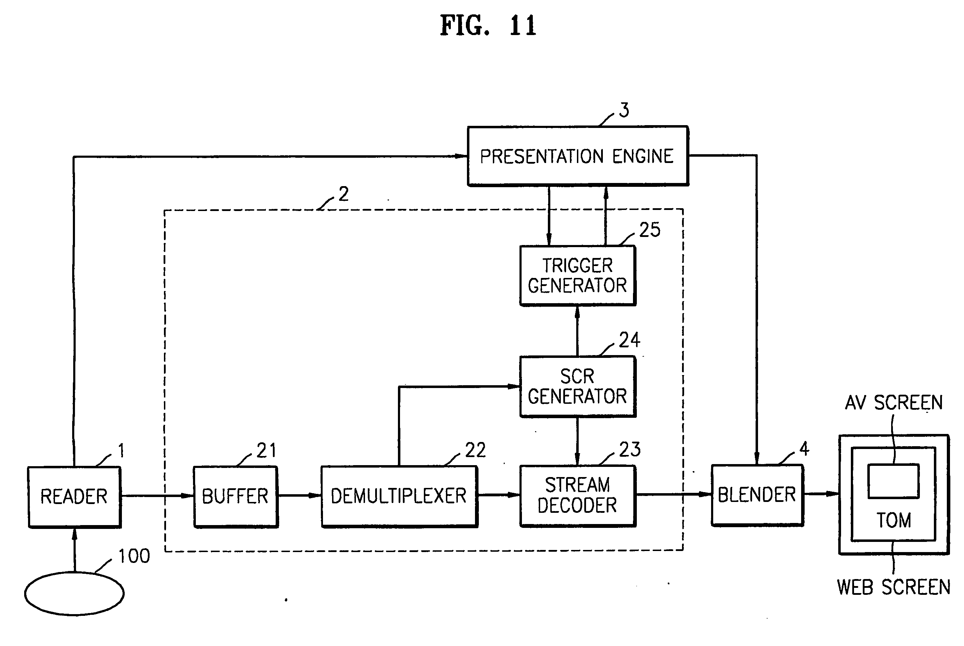

FIG. 11 is a block diagram of a reproduction apparatus according to a second embodiment of the present invention. The same blocks as those of FIG. 10 will not be described in detail because they perform the same functions.

Referring to FIG. 11, the decoder 2 includes a buffer 21, a demultiplexer 22, a stream decoder 23, a system clock reference (SCR) generator 24, and a trigger generator 25. The buffer 21 receives, as AV data, an MPEG PS stream according to an embodiment of the present invention, and buffers the same. The demultiplexer 22 demultiplexes the MPEG PS stream to packets. The SCR generator 24 monitors clock information attached to each of the packets in order to generate a system clock reference based on a predetermined clock value. The trigger generator 25 receives event occurrence information from the presentation engine 3 and notifies the presentation engine 3 of the point in time when a trigger occurs at a SCR corresponding to the received event occurrence information. Meanwhile, the stream decoder 23 decodes the stream packets based on the SCR.

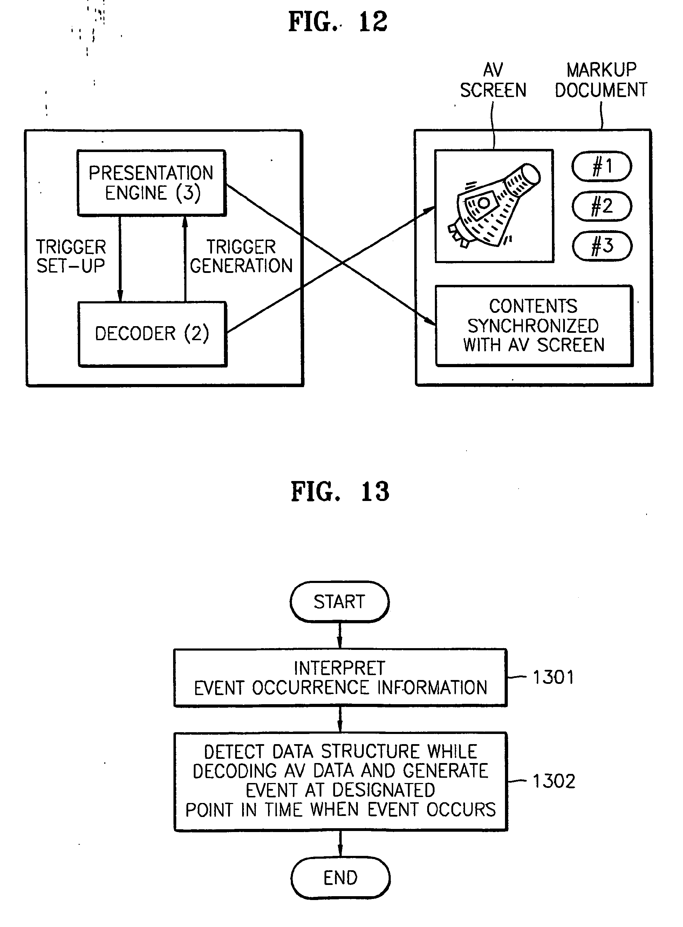

FIG. 12 is a reference diagram for illustrating in greater detail a process in which the reproduction apparatuses of FIGS. 10 and 11 generate an event according to the present invention. Referring to FIG. 12, a display screen is composed of a screen for a markup document and an AV screen inserted into the markup document screen. The presentation engine 3 sets a trigger position for a trigger event and transmits the set trigger position to the decoder 2. In other words, the presentation engine 3 interprets an API in the markup document and transmits the value of a parameter of which a trigger event is set up to the decoder 2. The decoder 2 detects a navigation pack in a video title set matched with the parameter value and transmits a trigger identifier to the presentation engine 3 in order to notify the presentation engine 3 to generate an event. Accordingly, the presentation engine 3 calls an in-built event handler. The event handler generates an event for displaying appropriate contents on a screen, at a point in time when the generation of an event is request or several milliseconds after the point in time.

Furthermore, the presentation engine 3 can generate an event to preload a corresponding file, at the point in time when the generation of an event is requested or several milliseconds after the point in time.

A reproduction method according to the present invention performed in a reproduction apparatus having such a structure as described above will now be described.

FIG. 13 is a flowchart illustrating a reproduction method according to the present invention. Referring to FIG. 13, first, a reproduction apparatus interprets event occurrence information recorded on the disc 100, in step 1301. Next, the reproduction apparatus detects the data structure of AV data while decoding the AV data and generates an event at a designated place defined in the data structure, in step 1302.

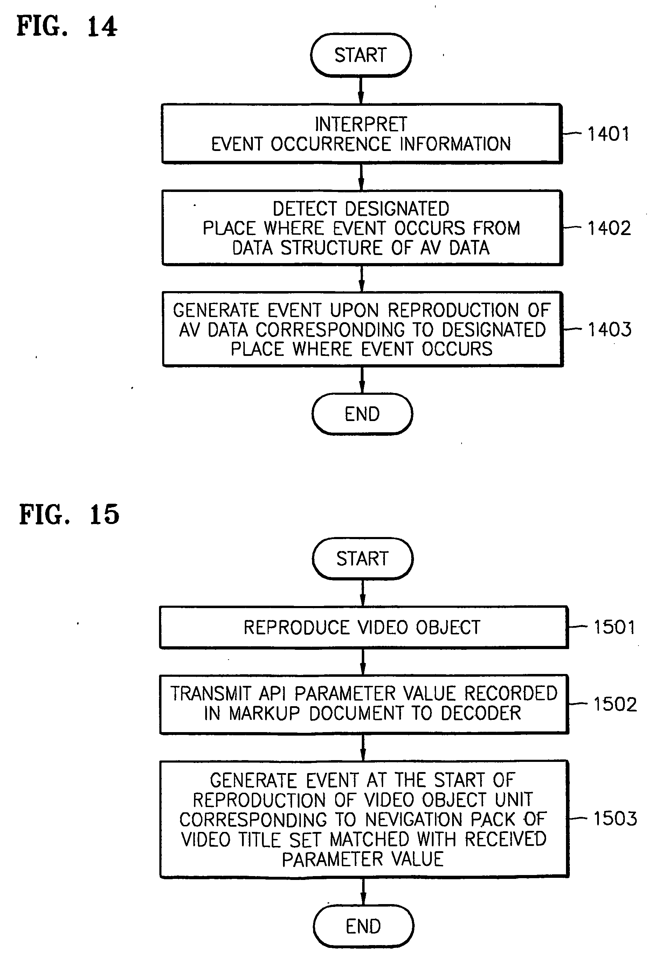

FIG. 14 is a flowchart illustrating an example of FIG. 13. Referring to FIG. 14, a reproduction apparatus reproduces a video object requested to be reproduced and outputs an AV screen. Meanwhile, the reproduction apparatus also overlaps the output AV screen on the display window for a markup document. At this time, in step 1401, the reproduction apparatus interprets event occurrence information recorded in a markup document. Next, in step 1402, the reproduction apparatus detects a designated place where an event occurs from the interpreted data structure. Thereafter, the reproduction apparatus generates a corresponding event when AV data at the detected place where an event occurs is reproduced, in step 1403.

FIG. 15 is a flowchart illustrating an embodiment of FIG. 14. Referring to FIG. 15, in step 1501, the decoder 2 of the reproduction apparatus reproduce a video object that a user requested to be reproduced. Meanwhile, in step 1502, the presentation engine 3 interprets an API recorded in a corresponding markup document and transmits a corresponding parameter value to the decoder 2. When a video object unit that contains a designated navigation pack in a video title set matched with the received parameter value is detected, or a program chain number and an elapse time are detected, the decoder 2 notifies the presentation engine 3 of the detection. The presentation engine 3 calls an event handler to output designated contents on a screen at a point in time when or several tens of milliseconds after a corresponding video object unit starts being reproduced. Alternatively, in step 1503, the presentation engine 3 outputs designated contents on a screen at the elapse time to reproduce a corresponding program chain or several tens of milliseconds after the elapse time. If a corresponding event has been preloaded, a corresponding preloading list file is preloaded.

In the above embodiments, an event occurs based on a corresponding video title set number (VTSN) and a corresponding navigation pack number NV_PCK_LBN. However, an event can occur based on other types of data structure, such as a video object number VOB_ID, a VOBU-reproduction start point in time VOBU_S_PTM, or the like.

The reproduction method can be written as a computer program. Codes and code segments for the computer program can be easily inferred by a computer programmer skilled in the art. Also, the program is stored in a computer readable recording medium and is read and executed by a computer in order to achieve a method of recording and reproducing a markup document and AV data. Examples of the computer readable recording medium include magnetic recording media, optical data storage devices, and carrier wave media.

As described above, in the present invention, an event-occurrence point in time is more simply designated by utilizing the data structure of an existing DVD-Video without change, and a specified event occurs at the designated event-occurrence point in time. Accordingly, a markup document screen can be more easily output in synchronization with an AV screen. That is, since a software timer does not need to operate to output the markup document screen in synchronization with the AV screen, the markup document screen can be more simply output. In addition, preloading is performed at a designated point in time.

### Industrial Applicability

As described above, in the present invention, an event-occurrence point in time is more simply designated by utilizing the data structure of an existing DVD-Video without change, and a specified event occurs at the designated event-occurrence point in time. Accordingly, a markup document screen can be more easily output in synchronization with an AV screen. That is, since a software timer does not need to operate to output the markup document screen in synchronization with the AV screen, the markup document screen can be more simply output. In addition, preloading is performed at a designated point in time.

## Claims

1. An information storage medium, comprising:
AV data including at least one video object that is constituted of video object units, each video object unit having an audio pack, a video pack, and a navigation pack;
**characterised by:**
event occurrence information specifying a data structure of the AV data for generating an event when the specified data structure is reproduced.

2. The information storage medium of claim 1, further comprising a markup document for outputting an AV screen from the AV data, wherein the event occurrence information is recorded in the markup document.

3. The information storage medium of claim 1, wherein the AV data is recorded as a video title set constituted of at least one video object, and the event occurrence information is for requesting that a trigger event occurs when a video object unit corresponding to the navigation pack of a designated video title set is reproduced.

4. The information storage medium of claim 3, wherein the event occurrence information requests that designated contents are output on a screen when a video object unit corresponding to the navigation pack of a designated video title set is reproduced.

5. The information storage medium of claim 4, wherein the contents are displayed on a predetermined portion of a markup screen on which the markup document is reproduced.

6. The information storage medium of claim 4, wherein the event occurrence information includes a trigger event identifier, the identifier of the designated video title set, and the identifier of the designated navigation pack.

7. The information storage medium of claim 6, wherein the trigger event identifier provides an application program interface for setting a trigger event and an application program interface for canceling the trigger event.

8. The information storage medium of claim 6, wherein the video title set identifier is a video title set number (VTSN) and the navigation pack identifier is a navigation pack number (NV_PCK_LBN).

9. The information storage medium of claim 6, wherein the video title set identifier is a video object number (VOB_ID) of a video title set to which a title being currently reproduced belongs, and the navigation pack identifier is determined by the point in time at which reproduction of a video object unit, VOBU_S_PTM, starts.

10. The information storage medium of claim 6, wherein the video title set identifier is a program chain number (PGCN), and the navigation pack identifier is the time or place of reproduction of a program chain displayed using a cell elapse time (C_ELTM).

11. The information storage medium of claim 6, wherein the video title set identifier is a title number (TTN) and the navigation pack identifier is the time or place of reproduction of the title.

12. The information storage medium of claim 7, wherein the application program interface includes as parameters, the trigger event identifier, the identifier of the designated video title set, and the identifier of the designated navigation pack.

13. A method of playing an information storage medium comprising AV data including at least one video object that is constituted of video object units, each video object unit having an audio pack, a video pack, and a navigation pack; and event occurrence information specifying a data structure of the AV data for generating a predetermined event when the specified data structure is reproduced, the method **characterised by**:
(a) interpreting the event occurrence information; and
(b) generating an event if a data structure matched with the result of the interpretation performed in step (a) is discovered while the AV data is being decoded.

14. The method of claim 13, wherein step (a) comprises:
(a1) interpreting event occurrence information in a markup document in which a display window for displaying an AV screen on which the video object is reproduced is defined; and
(a2) detecting the place in which an event matched with the interpretation result occurs.

15. The method of claim 14, wherein the video title includes at least one video object that is constituted of cells, each having an audio pack, a video pack, and a navigation pack, and, in step (b), the event occurs when portion of the AV data corresponding to the place in which an event occurs is reproduced.

16. The method of claim 15, wherein in step (b), designated contents are output on a screen at a point in time or several milliseconds after the reproduction of a video object unit corresponding to the navigation pack of a designated video title set.

17. The method of claim 13, wherein the event occurrence information includes a trigger event identifier, a designated video title set identifier, and a designated navigation pack identifier.

18. The method of claim 17, wherein the trigger event identifier includes an identifier for setting a trigger event and an identifier for canceling a trigger event.

19. The method of claim 13, wherein the event occurrence information is implemented as an application program interface.

20. The method of claim 19, wherein the application program interface has parameters, which are the trigger event identifier, the identifier of the designated video title set, and the identifier of the designated navigation pack.

## Patentansprüche

1. Informationsspeichermedium, umfassend:
AV-Daten, die mindenstens ein Videoobjekt enthalten, das aus Videoobjekteinheiten besteht, wobei jede Videoobjekteinheit ein Audio-Pack, ein Video-Pack und ein Navigations-Pack aufweist;
**gekennzeichnet durch**
Ereignisvorkommnisinformationen, die eine Datenstruktur der AV-Daten zum Erzeugen eines Ereignisses, wenn die spezifizierte Datenstruktur wiedergegeben wird, spezifizieren.

2. Informationsspeichermedium nach Anspruch 1, ferner mit einem Markup-Dokument zum Ausgeben eines AV-Schirmbilds aus den AV-Daten, wobei die Ereignisvorkommnisinformationen in dem Markup-Dokument aufgezeichnet werden.

3. Informationsspeichermedium nach Anspruch 1, wobei die AV-Daten als ein Videotitelsatz aufgezeichnet werden, der aus mindestens einem Videoobjekt besteht, und die Ereignisvorkommnisinformationen dazu dienen, anzufordern, daß ein Triggerereignis auftritt, wenn eine Videoobjekteinheit, die dem Navigations-Pack eines designierten Videotitelsatzes entspricht, wiedergegeben wird.

4. Informationsspeichermedium nach Anspruch 3, wobei die Ereignisvorkommnisinformationen anfordern, daß designierte Inhalte auf einem Schirmbild ausgegeben werden, wenn eine Videoobjekteinheit, die dem Navigations-Pack eines designierten Videotitelsatzes entspricht, wiedergegeben wird.

5. Informationsspeichermedium nach Anspruch 4, wobei die Inhalte auf einem vorbestimmten Teil des Markup-Schirmbilds angezeigt werden, auf dem das Markup-Dokument wiedergegeben wird.

6. Informationsspeichermedium nach Anspruch 4, wobei die Ereignisvorkommnisinformationen eine Triggerereigniskennung, die Kennung des designierten Videotitelsatzes und die Kennung des designierten Navigations-Packs enthalten.

7. Informationsspeichermedium nach Anspruch 6, wobei die Triggerereigniskennung eine Anwendungsprogrammschnittstelle zum Setzen eines Triggerereignisses und eine Anwendungsprogrammschnittstelle zum Löschen des Triggerereignisses bereitstellt.

8. Informationsspeichermedium nach Anspruch 6, wobei die Videotitelsatzkennung eine Videotitelsatznummer (VTSN) ist und die Navigations-Pack-Kennung eine Navigations-Pack-Nummer (NV_PCK_LBN) ist.

9. Informationsspeichermedium nach Anspruch 6, wobei die Videotitelsatzkennung eine Videoobjektnummer (VOB_ID) eines Videotitelsatzes ist, zu dem ein gerade wiedergegebener Titel gehört, und die Navigations-Pack-Kennung durch den Zeitpunkt bestimmt wird, an dem die Wiedergabe einer Videoobjekteinheit VOBU_S_PTM beginnt.

10. Informationsspeichermedium nach Anspruch 6, wobei die Videotitelsatzkennung eine Programmkettennummer (PGCN) ist und die Navigations-Pack-Kennung Zeit oder Ort der Wiedergabe einer Programmkette ist, die unter Verwendung einer Zellenablaufzeit (C_ELTM) angezeigt wird.

11. Informationsspeichermedium nach Anspruch 6, wobei die Videotitelsatzkennung eine Titelnummer (TTN) ist und die Navigations-Pack-Kennung die Zeit oder der Ort der Wiedergabe des Titels ist.

12. Informationsspeichermedium nach Anspruch 7, wobei die Anwendungsprogrammschnittstelle als Parameter, die Triggerereigniskennung, die Kennung des designierten Videotitelsatzes und die Kennung des designierten Navigations-Packs enthält.

13. Verfahren zum Abspielen eines Informationsspeichermediums mit AV-Daten, die mindestens ein Videoobjekt enthalten, das aus Videoobjekteinheiten besteht, wobei jede Videoobjekteinheit ein Audio-Pack, ein Video-Pack und ein Navigations-Pack aufweist; und Ereignisvorkommnisinformationen, die eine Datenstruktur der AV-Daten zum Erzeugen eines vorbestimmten Ereignisses, wenn die spezifizierte Datenstruktur wiedergegeben wird, spezifizieren, wobei das Verfahren durch die folgenden Schritte **gekennzeichnet** ist:
(a) Interpretieren der Ereignisvorkommnisinformationen; und
(b) Erzeugen eines Ereignisses, wenn eine mit dem Ergebnis der im Schritt (a) durchgeführten Interpretation übereinstimmende Datenstruktur entdeckt wird, während die AV-Daten dekodiert werden.

14. Verfahren nach Anspruch 13, wobei Schritt (a) die folgenden Schritte umfaßt:
(a1) interpretieren von Ereignisvorkommnisinformationen in einem Markup-Dokument, worin ein Anzeigefenster zum Anzeigen eines AV-Schirmbilds, auf dem das Videoobjekt wiedergegeben wird, definiert wird; und
(a2) dedektieren des Orts, an dem ein mit dem Interpretationsergebnis übereinstimmendes Ereignis auftritt.

15. Verfahren nach Anspruch 14, wobei der Videotitel mindestens ein Videoobjekt enthält, das aus Zellen besteht, die jeweils ein Audio-Pack, ein Video-Pack und ein Navigations-Pack aufweisen, und im Schritt (b) das Ereignis auftritt, wenn ein Teil der AV-Daten, der dem Ort entspricht, an dem ein Ereignis auftritt, wiedergegeben wird.

16. Verfahren nach Anspruch 15, wobei im Schritt (b) designierte Inhalte auf einem Schirmbild an einem Zeitpunkt oder mehrere Millisekunden nach der Wiedergabe einer Videoobjekteinheit, die dem Navigations-Pack eines designierten Videotitelsatzes entspricht, ausgegeben werden.

17. Verfahren nach Anspruch 13, wobei die Ereignisvorkommnisinformationen eine Triggerereigniskennung, eine Kennung des designierten Videotitelsatzes und eine Kennung des designierten Navigations-Packs enthalten.

18. Verfahren nach Anspruch 17, wobei die Triggerereigniskennung eine Kennung zum Setzen eines Triggerereignisses und eine Kennung zum Löschen eines Triggerereignisses enthält.

19. Verfahren nach Anspruch 13, wobei die Ereignisvorkommnisinformationen als eine Anwendungsprogrammschnittstelle implementiert werden.

20. Verfahren nach Anspruch 19, wobei die Anwendungsprogrammschnittstelle Parameter aufweist, die die Triggerereigniskennung, die Kennung des designierten Videotitelsatzes und die Kennung des designierten Navigations-Packs sind.

## Revendications

1. Support de mémorisation d'informations, comprenant :
des données AV comportant au moins un objet vidéo qui est constitué d'unités d'objet vidéo, chaque unité d'objet vidéo ayant un paquet audio, un paquet vidéo et un paquet de navigation ;
**caractérisé par** :
des informations d'occurrence d'événement spécifiant une structure de données des données AV pour générer un événement quand la structure de données spécifiée est reproduite.

2. Support de mémorisation d'informations selon la revendication 1, comprenant en outre un document de balisage pour produire une vue AV à partir des données AV, dans lequel les informations d'occurrence d'événement sont enregistrées dans le document de balisage.

3. Support de mémorisation d'informations selon la revendication 1, dans lequel les données AV sont enregistrées sous forme d'ensemble de titre vidéo constitué par au moins un objet vidéo, et les informations d'occurrence d'événement servent à demander qu'un événement de déclenchement se produise quand une unité d'objet vidéo correspondant au paquet de navigation d'un ensemble de titre vidéo désigné est reproduite.

4. Support de mémorisation d'informations selon la revendication 3, dans lequel les informations d'occurrence d'événement demandent qu'un contenu désigné soit produit sur une vue quand une unité d'objet vidéo correspondant au paquet de navigation d'un ensemble de titre vidéo désigné est reproduite.

5. Support de mémorisation d'informations selon la revendication 4, dans lequel le contenu est affiché sur une partie prédéterminée d'une vue de balisage sur laquelle le document de balisage est reproduit.

6. Support de mémorisation d'informations selon la revendication 4, dans lequel les informations d'occurrence d'événement comportent un identifiant d'événement de déclenchement, l'identifiant de l'ensemble de titre vidéo désigné et l'identifiant du paquet de navigation désigné.

7. Support de mémorisation d'informations selon la revendication 6, dans lequel l'identifiant d'événement de déclenchement fournit une interface de programme d'application pour établir un événement de déclenchement et une interface de programme d'application pour annuler l'événement de déclenchement.

8. Support de mémorisation d'informations selon la revendication 6, dans lequel l'identifiant d'ensemble de titre vidéo est un numéro d'ensemble de titre vidéo (VTSN) et l'identifiant de paquet de navigation est un numéro de paquet de navigation (NV PCK LBN).

9. Support de mémorisation d'informations selon la revendication 6, dans lequel l'identifiant d'ensemble de titre vidéo est un numéro d'objet vidéo (VOB_ID) d'un ensemble de titre vidéo auquel appartient un titre en cours de reproduction, et l'identifiant de paquet de navigation est déterminé par le point dans le temps où commence la reproduction d'une unité d'objet vidéo VOBU_S_PTM.

10. Support de mémorisation d'informations selon la revendication 6, dans lequel l'identifiant d'ensemble de titre vidéo est un numéro de chaîne de programme (PGCN) et l'identifiant de paquet de navigation est le temps ou l'endroit de reproduction d'une chaîne de programme affichée en utilisant un temps d'écoulement de cellule (C_ELTM).

11. Support de mémorisation d'informations selon la revendication 6, dans lequel l'identifiant d'ensemble de titre vidéo est un numéro de titre (TTN) et l'identifiant de paquet de navigation est le temps ou l'endroit de reproduction du titre.

12. Support de mémorisation d'informations selon la revendication 7, dans lequel l'interface de programme d'application comporte comme paramètres l'identifiant d'événement de déclenchement, l'identifiant de l'ensemble de titre vidéo désigné, et l'identifiant du paquet de navigation désigné.

13. Procédé de lecture d'un support de mémorisation d'informations comprenant des données AV comportant au moins un objet vidéo qui est constitué d'unités d'objet vidéo, chaque unité d'objet vidéo ayant un paquet audio, un paquet vidéo et un paquet de navigation ; et des informations d'occurrence d'événement spécifiant une structure de données des données AV pour générer un événement prédéterminé quand la structure de données spécifiée est reproduite, le procédé étant **caractérisé par** :
(a) l'interprétation des informations d'occurrence d'événement ; et
(b) la génération d'un événement si une structure de données correspondant au résultat de l'interprétation exécutée à l'étape (a) est découverte lors du décodage des données AV.

14. Procédé selon la revendication 13, dans lequel l'étape (a) comprend :
(a1) l'interprétation d'informations d'occurrence d'événements dans un document de balisage dans lequel est définie une fenêtre d'affichage pour afficher une vue AV sur laquelle l'objet vidéo est reproduit ; et
(a2) la détection de l'endroit où se produit un événement adapté au résultat d'interprétation.

15. Procédé selon la revendication 14, dans lequel le titre vidéo comporte au moins un objet vidéo qui est constitué de cellules, chacune ayant un paquet audio, un paquet vidéo et un paquet de navigation, et à l'étape (b) l'événement se produit quand une partie des données AV correspondant à l'endroit auquel un événement se produit est reproduite.

16. Procédé selon la revendication 15, dans lequel à l'étape (b) un contenu désigné est produit sur une vue à un point dans le temps ou plusieurs millisecondes après la reproduction d'une unité d'objet vidéo correspondant au paquet de navigation d'un ensemble de titre vidéo désigné.

17. Procédé selon la revendication 13, dans lequel les informations d'occurrence d'événement comportent un identifiant d'événement de déclenchement, un identifiant d'ensemble de titre vidéo désigné et un identifiant de paquet de navigation désigné.

18. Procédé selon la revendication 17, dans lequel l'identifiant d'événement de déclenchement comporte un identifiant pour établir un événement de déclenchement et un identifiant pour annuler un événement de déclenchement.

19. Procédé selon la revendication 13, dans lequel les informations d'occurrence d'événement sont mises en oeuvre sous forme d'interface de programme d'application.

20. Procédé selon la revendication 19, dans lequel l'interface de programme d'application a des paramètres, lesquels sont l'identifiant d'événement de déclenchement, l'identifiant de l'ensemble de titre vidéo désigné, et l'identifiant du paquet de navigation désigné.
